# EUROPEAN PATENT APPLICATION

(11) **EP 0 824 235 A1**
(43) Date of publication of application: **18.02.1998**
(21) Application number: 97113765.8
(22) Date of filing: 08.08.1997
(51) Int. Cl.: G06F 3/12

(54) **Image formation system controller and image formation processing method**

(30) Priority: 08.08.1996 JP 210000/96
(71) Applicant: RISO KAGAKU CORPORATION, Tokyo (JP)
(72) Inventor: Nakano, Kazuo, Riso Kagaku Corp. R&D Center, Inashiki-gun, Ibaraki (JP)
(74) Representative: Grünecker, Kinkeldey, Stockmair & Schwanhäusser Anwaltssozietät

(57) **Abstract**

Hosts 1a and 1b and printers 2a-2c are connected to a printer controller 5. Processing means 20 of the printer controller 5 makes the rounds of the printers 2a-2c, collects printer information, and stores the collected printer information in a RAM 23 as update information. When image information is sent from the host 1a, it is compared with the printer information stored in the RAM 23 and the printer 2b having the printer information matching the image information is selected. The selected printer 2b is connected to the host 1a, receives image information from the host 1a, and executes the corresponding printing.

## Description

### BACKGROUND OF THE INVENTION

This invention relates to an image formation machine controller for connecting a plurality of image formation machines and a host and outputting image formation information output from the host to an optimum image formation machine and an image formation processing system using the controller and an image formation processing method in the processing system.

Hitherto, image formation machines such as plain paper copiers (PPCs) and stencil printers have often been used in stand-alone.

That is, normally an original document as paper media is read through image read means in the image formation machine and an image is formed based on the read image.

In recent years, the image formation machine has been used increasingly as an output device of a personal computer, etc. In such a case, normally a data converter called a printer controller is used for converting image information output from the personal computer into a data format appropriate for processing in the image formation machine.

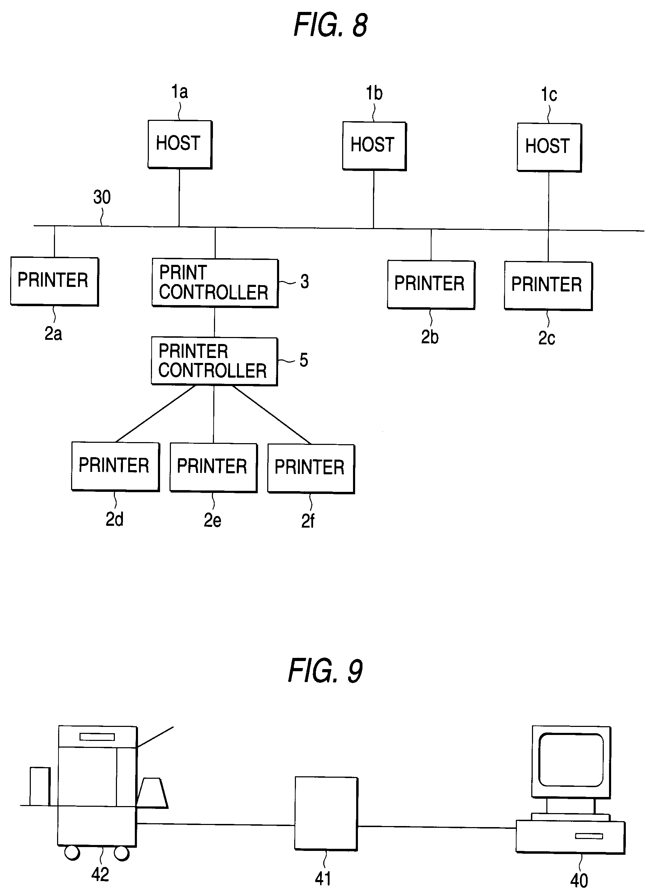

Fig. 9 is an illustration to show a connection configuration of a host and an image formation machine according to related art.

Image information provided for forming an image by image formation machine is prepared in a host 40, such as a personal computer, and is output via a print controller 41 to an image formation machine 42.

The print controller 41 converts image information output from the host 40 into a format that can be accepted by the image formation machine 42 (for example, a bit map format) and outputs the conversion result.

The image formation machine 42, which is, for example, a PPC or a stencil printer, forms an image on a print body such as paper based on the received image information.

The host 40 and the image formation machine 42 thus transfer control information (command/status) to each other in accordance with a predetermined communication system.

Here, the print controller 41 is placed between the host 40 and the image formation machine 42 for transferring the control information and the image information therebetween. It may be contained in the image formation machine 42.

One image formation machine 42 is allocated only to the corresponding host 40. Thus, if a plurality of the image formation machines 42 exist, they can be used only with the corresponding hosts 40.

Thus, whenever it becomes necessary to properly use the image formation machines different in print system, available paper size, print color, etc., according to the purpose, the user must change the connection between the image formation machine and the host.

### SUMMARY OF THE INVENTION

It is therefore an object of the invention to provide an image formation machine controller enabling connection of a large number of image formation machines including already existing image formation machines and an image formation processing system using the controller and an image formation processing method in the processing system.

According to a first aspect of the invention, there is provided an image formation machine controller being placed between a host for sending image information and a plurality of image formation machines for executing image formation processing based on the image information, to which the host and the image formation machines are connected, for collecting and storing image formation machine information indicating information about the image formation machines from the image formation machines, comparing the image information sent from the host at the image formation execution time with the collected image formation machine information, and selecting the optimum image formation machine for executing image formation processing based on the image information.

According to a second aspect of the invention, the image formation machine information may be collected from the image formation machines when the host and the image formation machine controller are not in communication.

According to a third aspect of the invention, there is provided an image formation machine controller being placed between a host for sending image information and a plurality of image formation machines for executing image formation processing based on the image information, the image formation machine controller comprising:
switch means, to which the host and the image formation machines are connected, for enabling connection to the host and connection to any desired image formation machine;
data storage means tor storing image formation machine information indicating information about the image formation machines from the image formation machines; and
processing means for comparing the image information sent from the host at the image formation execution time with the image formation machine information stored in the data storage means and controlling the switch means so as to send the image information to the optimum image formation machine for executing image formation processing based on the image information.

According to a fourth aspect of the invention, the processing means can collect the image formation machine information indicating information about the image formation machines repeatedly from each of the image formation machines and can update the corresponding image formation machine information stored in the data storage means.

According to a fifth aspect of the invention, there is provided an image formation processing system comprising:
at least one host for sending image information consisting of an information part made up of request items, required for image formation and image data indicating the image formation contents;
a plurality of image formation machines each for detecting image formation machine information indicating information about the image formation machine and executing image formation processing corresponding to the image information; and
an image formation machine controller, to which the host and the image formation machines are connected, for collecting the image formation machine information of the image formation machines repeatedly from each of the image formation machines, comparing the contents of the information part in the image information sent from the host at the image formation execution time with the image formation machine information, selecting the optimum image formation machine for executing the image formation processing based on the image information from among the image formation machines, and connecting the selected image formation machine to the host.

According to a sixth aspect of the invention, the image formation processing system may further include a print controller being placed between the host and the image formation machine for expanding the image data contained in the image information sent from the host at the image formation execution time to a format that can be accepted by the image formation machine and outputs the image data in the format as new image information.

According to a seventh aspect of the invention, there is provided, in an image formation processing system comprising a plurality of hosts for sending image information, a plurality of image formation machines for executing image formation processing based on the image information, and an image formation machine controller being placed between the hosts and the image formation machines, an image formation processing method comprising the steps of:
collecting image formation machine information of the image formation machines from the image formation machines;
when the image information is sent from one of the hosts, comparing the image information with the image formation machine information and selecting the image formation machine having the image formation machine information matching the image information; and
connecting the selected image formation machine to the host and sending the image information to the image formation machine.

According to an eighth aspect of the invention, the image formation processing method may further comprise the step of selecting the image formation machine applying to the image information when selecting conditions are relaxed if the image formation machine having the image formation machine information matching the image information is not found in the comparing step.

The image formation machine controller 5, which is provided between the hosts 1a and 1b and the image formation machines 2a-2c, collecting the image formation machine information of the paper size, color, etc., repeatedly form each of the image formation machines and stores the image formation machine information in the RAM 23 as update information.

When requesting image formation, the host 1a sends the image information consisting of the information part made up of request items of paper size, color specification, etc., required for the image formation and image data indicating the image formation contents.

At this time, the host 1a simply sends the image information to the image formation machine controller 5 without specifying the image formation machine 2a-2c.

The processing means 20 of the image formation machine controller 5 compares the image information sent from the host 1a with the image formation machine information stored in the RAM 23 and selects the image formation machine 2b having the image formation machine information matching the image information.

The selected image formation machine 2b is connected to the host 1a by the switch means 29, receives image information from the host 1a, and can execute the corresponding printing.

### BRIEF DESCRIPTION OF THE DRAWINGS

Fig. 1 is a schematic diagram to show an embodiment of an image formation processing system of the invention;
Fig. 2 is a block diagram to show an internal configuration of a print controller;
Fig. 3 is a block diagram to show an internal configuration of an image formation machine controller;
Fig. 4 is an illustration to show image formation machine information stored in RAM;
Fig. 5 is a flowchart to show image formation machine information collection processing performed by an image formation machine controller;
Fig. 6 is an illustration to show image formation machine information stored in RAM;
Fig. 7 is a flowchart to show connection processing performed by the image formation machine controller;
Fig. 8 is a block diagram to show another embodiment of the invention; and
Fig. 9 is an illustration to show a connection configuration of a host and an image formation machine in related art.

### DETAILED DESCRIPTION OF THE PREFERRED EMBODIMENTS

Referring now to the accompanying drawings, there are shown preferred embodiments of the invention.

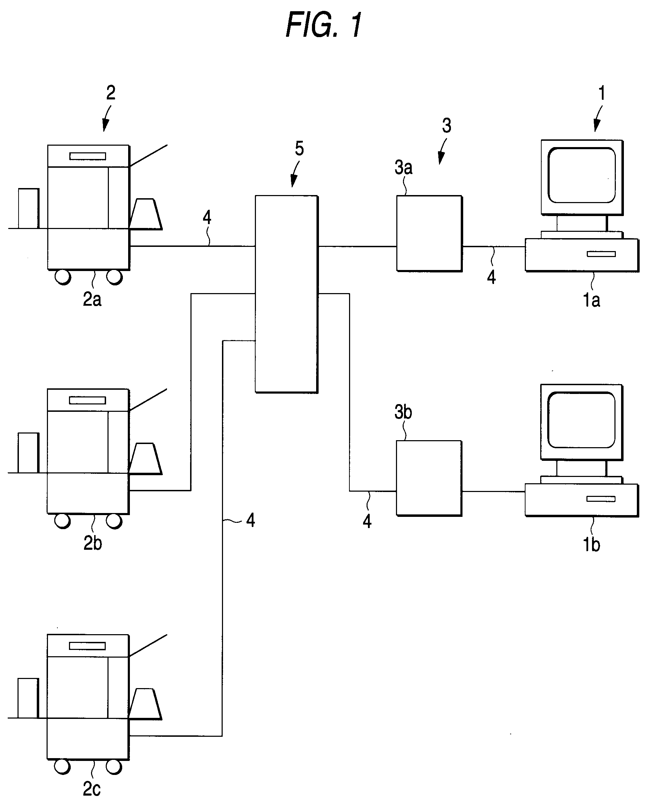

Fig. 1 is a schematic diagram to show an image formation processing system of the invention.

As shown here, the image formation processing system uses a plurality of hosts (personal computers) 1 and a plurality of image formation machines 2. The image formation machine 2 will be described by taking a stencil printer (simply, printer) as an example.

The hosts 1 and the printers 2 can be used conventional ones.

Image information output from the host 1 is input to a data input section of the printer 2 via a serial or parallel connection cable 4 for data transmission and a print controller 3 (3a, 3b). The connection cable 4 has a data line for transmitting image information and a control line for transmitting control information.

The print controller 3, which has the similar configuration to the conventional one, converts the image information from the host 1 into a predetermined format and outputs the image information in the format.

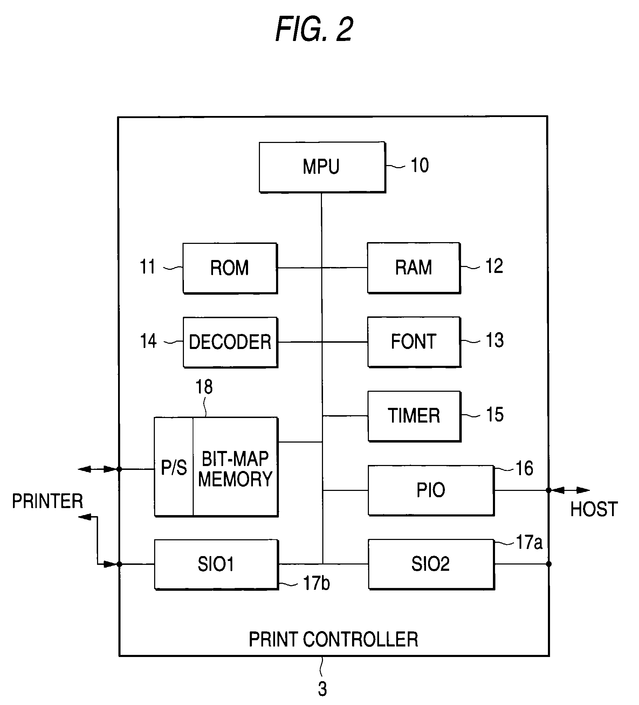

Fig. 2 is a block diagram to show an internal configuration of the print controller 3.

The print controller 3 is made up of processing means (MPU) 10, program storage means (ROM) 11, data storage means (RAM) 12, a font memory 13, a decoder 14, a timer 15, a parallel input/output interface PIO 16 of Centronics specification, etc., a serial input/output interface SIO 17a of RS232C specification, etc., SIO 17b of video I/F specification, etc., a bit map memory 18 such as D-RAM, and the like.

In accordance with a program stored in the ROM 11, the MPU 10 stores image information transferred via the PIO 16 or the SIO 17a in the RAM 12, analyzes the image information by the decoder 14, and uses font in the font memory 13 to expand the image information in the bit map memory 18 in a bit map format as required.

The image information expanded in the bit map memory 18 is transferred via the SIO 17b to the printer 2 after it is ensured that the printer 2 is ready (in a printable state).

Known machines can be used to form the configuration wherein the hosts 1 and the printers 2 are installed and are connected by the print controllers 3, as described above.

In the image formation processing system, two hosts 1 (1a and 1b) and three printers 2 (2a-2c) are used in the example as shown in Fig. 1, and an image formation machine controller (printer controller) 5 is provided between the hosts 1 and the printers 2.

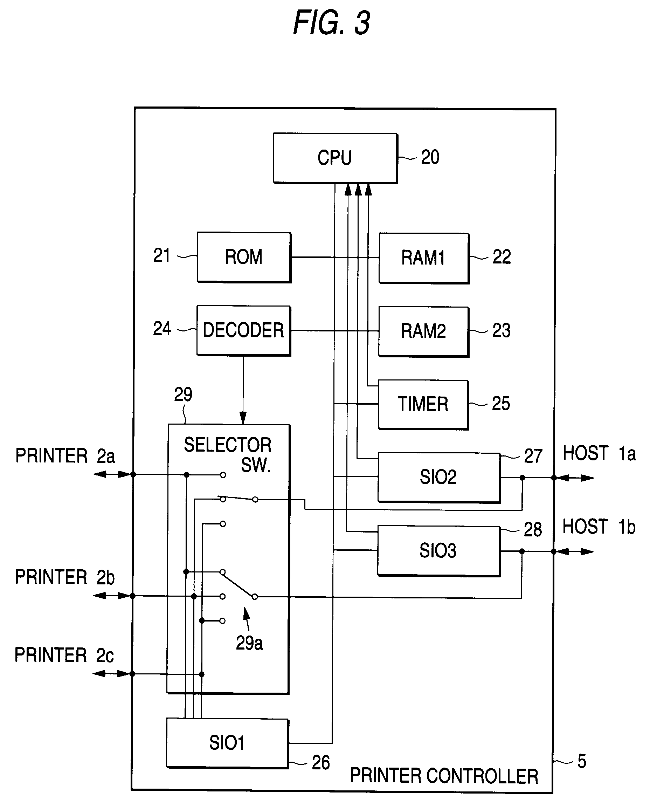

Fig. 3 is a block diagram to show an internal configuration of the printer controller 5.

The printer controller 5 contains processing means (CPU) 20, program storage means (ROM) 21, data storage means (RAM) 22 and 23, a decoder 24, a timer 25, SIO 26, 27, and 28, and switch means 29.

The RAM 22 is used as a work area of the CPU 20 and the RAM 23 is used as a storage area at image formation machine information (printer information) of the printers 2a-2c. Only the single RAM 22 can also be used so that it is divided into the work area and the printer information storage area.

The SIO 26, 27, 28 uses a serial port or a dedicated line; in addition, general-purpose PIO (parallel port) of Centronics connection, etc., can also be used.

The hosts 1a and 1b (print controllers 3a and 3b) are connected to one side of the switch means 29 and the printers 2a-2c are connected to the other side so that the hosts 1 and the printers 2 are switched for connection.

The switch means 29 contains a switch 29a for enabling a large number of printers 2 to be switched to one host 1 in one channel for connection.

In the example shown in the figure, one of the three printers 2a-2c can be connected to the two hosts 1a and 1b at a time; 2-channel connection in total can be made at the same time.

For this connection, the printer controller 5 selects an optimum printer 2 for the host 1, as described later.

The number of channels can be increased or decreased in response to the number of the hosts 1 and the number of the printers 2.

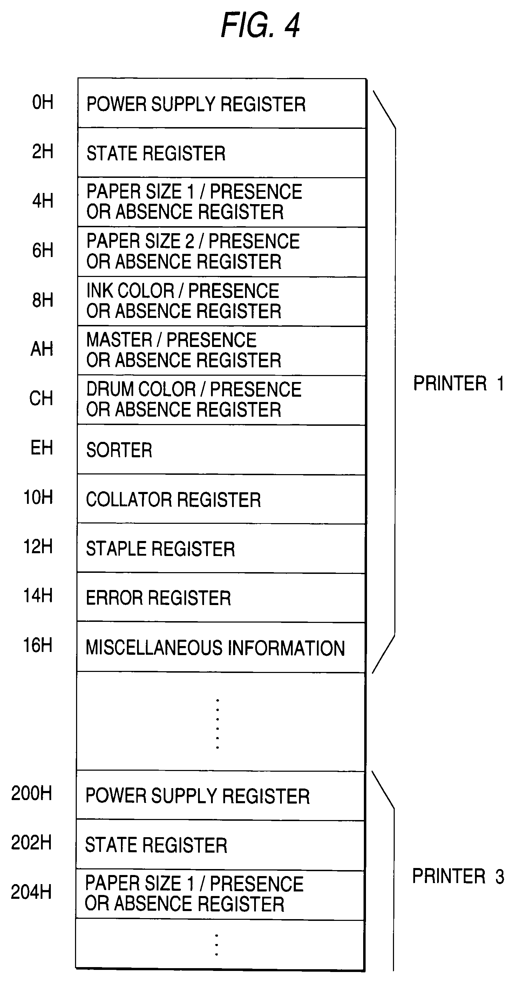

Fig. 4 is an illustration to show printer information of the printers 2a-2c stored in the RAM 23. The RAM 23 contains storage areas set in a one-to-one correspondence with the printers 2a-2c; each time printer information indicating printable items is read from the printer 2a-2c, data in the corresponding storage area is updated.

The data stored in the RAM 23 (printer information) will be discussed by taking the printer 2a as an example.

A power supply register stores information indicating the power supply state of the printer 2a (on or off).

A state register stores information indicating the operation state of the printer 2a (printing or standby).

More than one paper size/presence or absence register is provided and stores size information of print paper set in the printer 2a and information indicating whether or not print paper of the size set in the printer exists.

An ink color/presence or absence register stores information indicating ink color set in the printer 2a and whether or not ink remains.

A master/presence or absence register stores information concerning whether or not a stencil master used with the printer 2a exists.

A drum color/presence or absence register stores information indicating whether or not a drum is attached to the printer 2a.

A sorter register stores information indicating whether or not a sorter function for sorting print paper discharged from the printer 2a is available and information concerning sort modes that can be handled in the printer 2a.

A collator register stores information indicating whether or not a collator function for collating print paper discharged from the printer 2a is available and information concerning the size that can be collated.

An error register stores the error contents when an error causing the print operation to stop occurs in the printer 2a.

A staple register stores information indicating whether or not a function of stapling discharged print paper is available and staple position information.

In addition, if information concerning printing of the printer 2a or information on added functions, etc., exists, the information is stored in the corresponding register.

The processing means of the printer 2a previously senses the printer information by state sensing means in the printer before the printer controller 5 reads the print information.

For example, the data stored in the paper size/presence or absence register is data provided by a paper sensor for sensing the size of print paper on a paper feed tray of the printer 2a. When print paper is supplied with a cassette, the cassette is provided with recognition means corresponding to the paper size and when the cassette is mounted on the printer, it is sensed.

For the data stored in the ink color/presence or absence register, when an ink cartridge is mounted on a printing drum, a dip switch of the printer 2a is set, or the ink cartridge is provided with color recognition means and when the ink cartridge is mounted on the printer 2a, it is sensed.

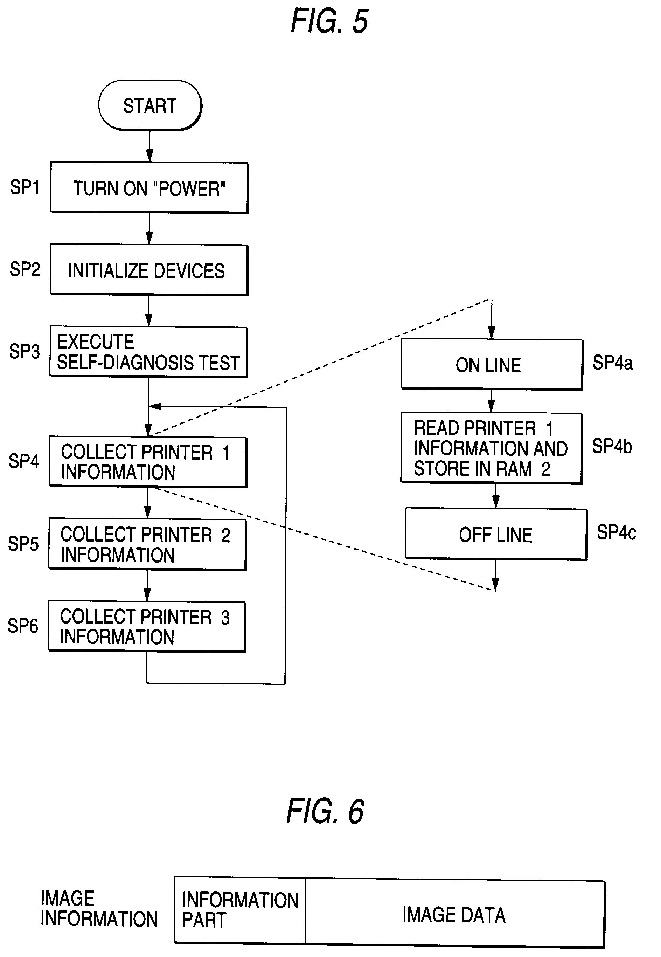

Fig. 5 is a flowchart to show printer information collection processing of the printers 2a-2c performed by the printer controller 5.

When the power is turned on at step SP1, the CPU 20 initialize the devices at step SP2 and carries out a self-diagnosis of the operation of the sections of the printer controller 5 at step SP3 in accordance with programs stored in the ROM 21.

After completion of the initialization, the SIO 26 is used to collect printer information of the printers 2a-2c connected by the switch means 29 at steps SP4-SP6.

Specifically, first the printer controller 5 places connection to the printer 2a online at step SP4a, reads status information from the printer 2a, and stores the read printer information (data) in the storage area of the RAM 23 allocated to the printer 2a at step SP4b, then places the connection to the printer 2a offline at step SP4c.

Likewise, printer information of the printers 2b and 2c is collected. The printer information of the printers 2a-2c can be collected only when the printer controller 5 and the host 1a, 1b are offline.

As shown in the figure, the printer information of the printers 2a-2c is always read in sequence and updating the data in the RAM 23 is continued in a loop from step SP6 to step SP4.

Thus, the printer controller 5 collects printer information instead of the host and when collecting the printer information, the printer controller 5 places connection to each printer 2a-2c online and offline.

The printer information collection processing is interrupted when another request (input processing interrupt or any other control interrupt) occurs.

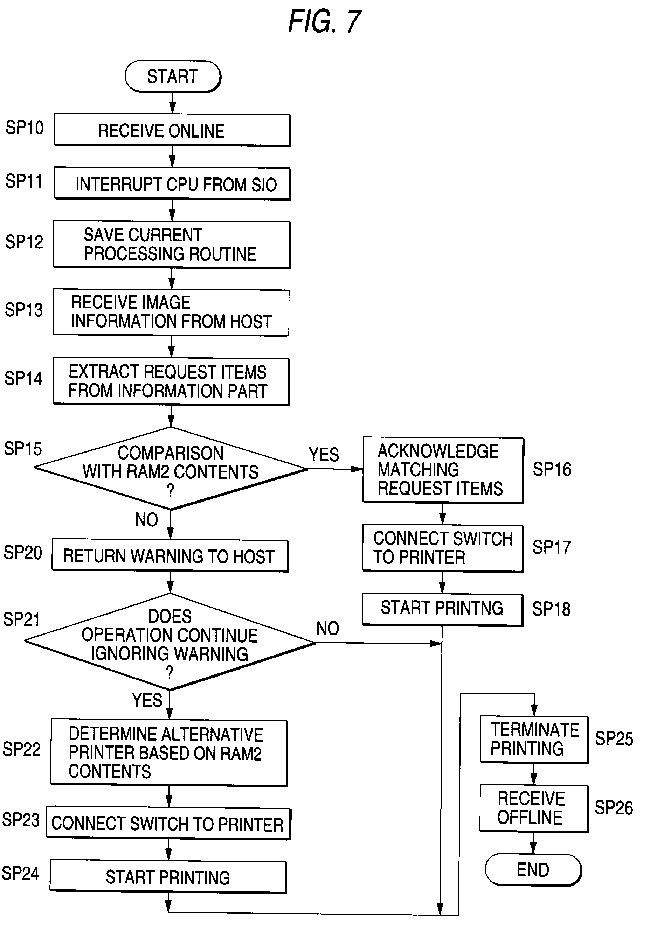

Fig. 7 is a flowchart to show connection processing performed by the printer controller 5. This connection processing is to determine the optimum printer 2 for image information from the host 1 and connect the host and the optimum printer 2; it is executed in interrupt service for the collection processing.

The host 1a places the connection to the print controller 3a online during the period of sending image information shown in Fig. 6 at step SP10.

The printer controller 3a receives "information part" and "image data" making up the image information and expands the "image data" in the bit map formation described above.

After sending the image information, the host 1a places the connection to the print controller 3a offline.

Thus, to send the image information, the host 1a controls the connection to the printer controller 5 online/offline simply via the connection cable 4 without obtaining printer information required for executing print and without specifying the printer 2 for executing print. That is, when requesting print, the host 1a needs only to send the image information to the printer controller 5 regardless of the state of each printer 2.

Next, when the image information is output from the print controller 3a, the CPU 20 is interrupted from the SIO 27 in the printer controller 5 at step SP11 and the CPU 20 starts input processing of the image information. At this time, only the connection of the print controller 3a and the printer controller 5 is placed online.

At this time, the above-mentioned printer information collection processing is temporarily stopped and the state at the stop time is saved at step SP12.

Next, the CPU 20 of the printer controller 5 receives the image information output from the print controller 3a at step SP13.

The CPU 20 reads the "information part" at the top of the image information and extracts print request items specified by the host 1a at step SP14.

Next, the CPU 20 compares the print request items with the printer information stored in the RAM 23 at step SP15 and determines the printer 2a-2c matching the request made by the host 1a.

This determination process will be discussed. For example, when the "information part" of the image information specifies that the paper size is A4 and that the ink color is black, the printer information of each printer in the RAM 23 is checked in sequence and the printer 2 matching the request is determined.

Here, printer information is collected from the printers 2 in sequence and is stored in the RAM 23 as update information as described above, whereby the printer controller 5 can always keep track of the most recent state of each printer 2. Thus, when the image information is sent from the host 1a, the selection probability of the printer 2 which actually matches the request and can execute printing can be improved.

If the printer 2 matching the request is determined to be the printer 2b, for example, at step SP15, matching the request items is acknowledged at step SP16.

The switch 29a of the switch means 29 is switched for connecting the printer controller 3a and the printer 2a at step SP17.

After this, the printer controller 5 mediates the connection of the print controller 3a and the printer 2b through the switch means 29 and does not process the image information.

The connection of the print controller 3a and the printer 2b is placed online, whereby the print controller 3a sends the image information to the printer 2b, which then starts the print operation at step SP18.

First, the "information part" of the image information is sent and the printer 2b selects the corresponding paper size, sets the operation of the sorter, the collator, the staple function, etc.

After this, the print controller 3a placed between the host 1a and the printer 2a converts the "image data" sent front the host 1a into a format that can be accepted by the printer 2b, then the image data converted into the format is output through the printer controller 5 to the printer 2b for executing predetermined print operation.

The print operation will be discussed. First, a stencil master consisting of porous tissue and heat-sensitive plastic film is perforated based on the "image data" contents by TPH, etc., of a stencil making section. The stencil master thus made is wound around a printing drum.

After this, as the printing drum is rotated, the printing sheet of the paper size selected is fed one by one and is transported to the printing drum under pressure, whereby printing ink of a predetermined color is supplied from the inner peripheral surface of the printing drum through the stencil master to the printing sheet for forming a desired image on the printing sheet.

Then, the printing sheet is discharged to a paper receiving tray, etc., downstream from the printing drum, and undergoes sorter sorting, collator collating, stapling, etc., based on the operation setting.

When the print operation terminates at step SP25, the connection of the print controller 3a and the printer 2b is placed offline at step SP26 and the control operation of the printer controller 5 terminates accordingly.

If the printer 2 with the printer information stored in the RAM 23 completely matching the request items specified in the "information part" of the image information does not exist at step SP15 (printer determination process), the printer controller 5 returns a "warning" to the effect that not match is found to the host 1a at step SP20.

Upon reception of the warning, the host 1a performs corresponding processing; if print is canceled at step SP21, the operation of the printer controller 5 also terminates.

On the other hand, if the host 1a outputs an instruction to execute printing ignoring the "warning" at step SP21, the printer controller 5 accepts the print instruction.

Specifically, the selection criterion is changed based on a program stored in the ROM 21 of the printer controller 5. Thus, match determination conditions of the printer information stored in the RAM 23 with the request items specified in the "information part" of the image information is made moderate for again selecting a connectable printer 2. To again select a connectable printer 2, the printers are previously ranked at the first selection time or the printer controller 5 again selects a printer.

For example, when the "information part" of the image information specifies that the paper size is B6 and that the ink color is black, if the printer information in the RAM 23 does not contain the corresponding paper size, a printer having a paper size close to B6 is selected. If it is determined that the printer 2c has the B5 size and can print, the printer 2c is selected as an alternative printer at step SP22.

After this, the switch 29a of the switch means 29 is switched for connecting the print controller 3a and the printer 2c at step SP23.

The connection of the print controller 3a and the printer 2c becomes online, whereby the print controller 3a sends the image information to the printer 2c, which then starts the print operation at step SP24.

In the example, if the printer 2 has print paper of a larger paper size than the size specified in the request items, at least print matter of the image size expected at the beginning can be provided, thus it is allowed in changing the paper size.

In contrast, in changing the paper size, if the printer 2 has only print paper of a smaller paper size than the size specified in the request items, at least print matter of the image size expected at the beginning cannot be provided, thus an inquiry as to whether or not automatic reduction is to be executed is returned to the host, which then sends an answer (instruction) to the inquiry to the printer controller 5.

In another setting example, if the paper size matches the request, the ink color may be unmatch, or if a printer capable of stapling does not exist although the sort operation using a stapler is specified in the information part, a printer to which a sorter not performing stapling is connected can also be selected.

Thus, the inconvenience of making it impossible to perform the print operation because some of printer information does not match the request items in the information part can be avoided.

By the way, the printer 2 with the paper size/presence or absence register indicating a paper-out condition in the printer information of the printers 2 stored in the RAM 23 is inhibited from printing paper of the requested paper size (sending image information is inhibited). Likewise, the printer 2 with the ink color/presence or absence register indicating an ink-out condition is also inhibited from printing. Use of the printer 2 with the error register storing error information is also disabled.

Since the printer controller 5 collects in sequence the printer information of the printers 2a-2c stored in the RAM 23, if the printer 2 is restored to a printable state, immediately its printer information is stored in the RAM 23.

As described above, when another host 1b sends a print instruction (image information) via the SIO 27, 28 to the printer 2b executing the print operation based on the image information from the host 1a, the printer controller 5 returns a message indicating "printing" to the host 1b.

In the connection processing executed by the printer controller 5, even if the host 1a and the printer 2b are connected, when it is determined that the request items specified by the host 1b match the printer 2a or 2c, the printer controller 5 can switch the switch 29a of the switch means 29 for connecting the host 1b and the printer 2a (2c).

Thus, a plurality of the hosts 1 and the printers 2 can be connected and the print operation based on the image information can be executed concurrently.

The print controller 3a, 3b can also be integral with the printer controller 5.

In this case, the MPU 10 and the CPU 20 can be made common as a single unit, the ROMs 11 and 21 can be made common, the RAMs 12, 22, and 23 can be made common, the timers 15 and 25 can be made common, and some of the input/output interfaces PIO 16 and SIO 17a, 17b, 16, 27, and 28 can be made common; the number of parts can be decreased.

Next, Fig. 8 shows another embodiment of the invention.

The embodiment will be discussed by taking an environment wherein a plurality of hosts 1a to 1c and a plurality of printers 2a to 2c are connected by a LAN 30 as shown in Fig. 8 as an example.

To add a plurality of printers in the LAN 30 environment, the added printers 2d-2f are connected through a printer controller 5 and a print controller 3.

The printer controller 5 collects printer information of the printers 2d-2f. It stores image information of all the added printers 2d-2f in a RAM 23 and transfers the information to and from the host 1 instead of the printers 2d-2f.

Therefore, the host 1 can send image information to the printer controller 5 as if one printer existed without the need for managing (accessing) the added printers 2d-2f separately. The printer controller 5 selects a suitable one of the printers 2d-2f for the image information and connects the selected printer 2 to the host 1.

The printers 2d-2f are not limited to the added printers and can also use the printers previously connected to the LAN 30.

The print controller 3 expands "image data" of the image information to a format that can be accepted by the printer 2 and outputs the image data in the format.

Therefore, the print controller 3 can be disposed not only between the host 1 and the printer controller 5 as in the above-described embodiment, but also between the printer controller 5 and the printer 2. That is, it may be placed following the printer controller 5 as viewed from the host 1.

In the embodiments, the printers are used as the image formation machines. However, the image formation machines are not limited to the printers and if some or all printers are replaced with copiers (PPCs), similar effects can be produced.

The image formation machine controller of the invention previously collects and stores the image formation machine information indicating the items according to which the image formation machines connected to the image formation machine controller can form an image, compares the image information sent from the host with the image formation machine information, selects the optimum image formation machine that can execute the image formation, and sends the image information to the image formation machine, whereby when a number of hosts and a number of image formation machines are provided, the image formation machine controller mediates among them and can automatically select the image formation machine that can handle an image formation request received from the host.

Thus, the host can send image information without specifying any image formation machine; on the other hand, formable image information is input to the image formation machine. The image information can be transferred between the host and the image formation machine extremely smoothly.

This effect is produced when a large number of hosts and a large number of image formation machines are provided. Also in this case, the command system between the hosts and the image formation machines need not be corrected; the image formation machine controller needs only to be disposed between the known hosts and the known image formation machines for connection thereof. An image formation processing system containing a large number of hosts and a large number of image formation machines can be easily constructed using the known hosts and the known image formation machines as they are.

The image formation machine information is collected from the image formation machines in sequence and is updated and stored, whereby the image formation machine controller can always keep track of the most recent state of the image formation machines. When the image information is sent from the host, the selection probability of the image information system which actually matches the request and can execute printing can be improved.

In addition, the image formation machine information is collected when image information is not sent from the host (normally, the image formation machines are offline). Thus, when image information is sent to the image formation machine controller, an immediate response can be made.

## Claims

1. An image formation machine controller provided between a host for sending image information and a plurality of image formation machines for executing image formation processing based on the image information,
wherein the host and the image formation machines are connected to the image formation machine controller, the image formation machine controller collects and stores image formation machine information indicating items information about the image formation machines from the image formation machines,
the image formation machine controller compares the image information sent from the host at image formation execution with the collected image formation machine information, and the image formation machine controller selects the optimum image formation machine for executing image formation processing based on the image information.

2. The image formation machine controller according to claim 1, wherein the image formation machine information is collected from the image formation machines when the host and the image formation machine controller are not in communication.

3. An image formation machine controller provided between a host for sending image information and a plurality of image formation machines for executing image formation processing based on the image information, the image formation machine controller comprising:
switch means, to which the host and the image formation machines are connected, for enabling connection to the host and connection to any desired image formation machine;
data storage means for storing image formation machine information indicating information about the image formation machines from the image formation machines; and
processing means for comparing the image information sent from the host at image formation execution with the image formation machine information stored in the data storage means and controlling the switch means so as to send the image information to the optimum image formation machine for executing image formation processing based on the image information.

4. The image formation machine controller according to claim 3, wherein the processing means collects the image formation machine information indicating information about the image formation machines repeatedly from each of the image formation machines and updates the corresponding image formation machine information stored in the data storage means.

5. An image formation processing system comprising:
at least one host for sending image information including an information part made up of request items, required for image formation and image data indicating the image formation contents;
a plurality of image formation machines each for detecting image formation machine information indicating information about the image formation machine and executing image formation processing corresponding to the image information; and
an image formation machine controller including,
switch means, to which the hosts and the image formation machines are connected, for enabling connection to any desired host and connection to any desired image formation machine;
means for collecting the image formation machine information of the image formation machines repeatedly from each of the image formation machines; and
means for comparing the image information sent from the host at image formation execution with the image formation machine information stored in the data storage means and controlling the switch means, selecting to the optimum image formation machine for executing image formation processing based on the image information, and connecting the optimum image formation machine with the host.

6. The image formation processing system according to claim 5, further comprising:
a print controller provided between the host and the image formation machine, for expanding the image data contained in the image information sent from the host at the image formation execution to a format being acceptable by the image formation machine and outputs the image data in the format as new image information.

7. an image formation processing method in an image formation processing system comprising a plurality of hosts for sending image information, a plurality of image formation machines for executing image formation processing based on the image information, and an image formation machine controller being placed between the hosts and the image formation machines, the image formation processing method comprising the steps of:
collecting image formation machine information of the image formation machines from the image formation machines;
when the image information is sent from one of the hosts, comparing the image information with the image formation machine information and selecting the image formation machine having the image formation machine information matching the image information; and
connecting the selected image formation machine to the host and sending the image information to the image formation machine.

8. The image formation processing method according to claim 7, further comprising the step of:
selecting the image formation machine applying to the image information when selecting conditions are relaxed if the image formation machine having the image formation machine information matching the image information is not found in the comparing step.
